# EUROPÄISCHE PATENTANMELDUNG

(11) **EP 2 228 154 A1**
(43) Veröffentlichungstag der Anmeldung: **15.09.2010**
(21) Anmeldenummer: 09003708.6
(22) Anmeldetag: 14.03.2009
(51) Int. Cl.: B22D 21/00, B22D 35/00, B22D 37/00, B22D 41/16, C22B 26/22, F27D 3/14, F27D 13/00

(54) **Magnesiumrecyclinganlage mit exakter und notfallrobuster Dosiervorrichtung**

(71) Anmelder: Antrok Lotz Barde GmbH, 34225 Baunatal (DE)
(72) Erfinder: Die Erfindernennung liegt noch nicht vor
(74) Vertreter: Reinhardt, Thomas Johannes

(57) **Zusammenfassung**

Die vorliegende Erfindung betrifft das Gebiet der Prozesssteuerung bei der Handhabung und Abfüllung von Flüssigkeiten, insbesondere von magnesiumhaltigen Schmelzen. Sie betrifft insbesondere eine Recyclinganlage für magnesiumhaltige Legierungen und eine Dosiervorrichtung zum Abfüllen der magnesiumhaltigen Schmelze.

Um eine hinreichend exakte Dosierung auf technisch einfache, robuste und zuverlässige Weise zu ermöglichen, wird ein Ventilsitz für einen Dichtungskörper mit besonderer Geometrie vorgeschlagen, dass
der sich verjüngende Abschnitt (17) des Dichtungskörpers (16) im Bereich des Kontakts zur Anlagefläche (21) eine Tangente aufweist, die einen Abdichtwinkel α von 20° +/-4° zur Längsachse des Dichtungskörpers bildet. und
f) der obere Schulterarm mit der Längsachse des Dichtungskörpers (16) einen Verjüngungswinkel y von 46° +/- 8° zur Längsachse des Dichtungskörpers aufweist.

## Beschreibung

### Stand der Technik

Die vorliegende Erfindung betrifft das Gebiet der Prozesssteuerung bei der Handhabung und Abfüllung von Flüssigkeiten, insbesondere von magnesiumhaltigen Schmelzen. Sie betrifft insbesondere eine Magnesiumrecyclinganlage und eine Dosiervorrichtung zum Abfüllen der magnesiumhaltigen Schmelze.

Ein Verfahren und eine Vorrichtung zur Handhabung von Magnesium- und magnesiumhaltigen Schmelzen ist in der deutschen Patentschrift DE 4203193 C2 offenbart. Dort wird festgestellt, dass in allen Bereichen der Technik, in denen durch Gewichtseinsparung eine Reduzierung der Umweltbelastungen im Sinne eine Senkung des Treibstoffverbrauches wie auch der Minimierung beschleunigter Massen im Vordergrund steht, ein besonderes Interesse an der Verfügbarkeit von Materialien mit besonders guten mechanischen Eigenschaften bei geringem Gewicht vorhanden ist. Dabei kommt der Herstellung und Verarbeitung von Magnesium und Magnesiumlegierungen, beispielsweise Aluminium-Magnesiumlegierung, eine wachsende Bedeutung zu. Da beispielsweise Aluminium-Magnesiumlegierungen schon einige Jahre im Einsatz sind bei der Konstruktion von Getriebegehäusen und Motorgehäusen, kommt auch dem Recycling solcher Bauteile eine zunehmende Bedeutung zu.

Generell gilt hierbei, dass es zur Vermeidung von gefährlichen Bränden unvermeidlich ist, bei der Handhabung flüssiger Schmelzen, die Magnesium enthalten, besondere Sicherheitsvorkehrungen zu treffen. Die gesamte Anlage zur Herstellung von solchen Druckgussteilen erfordert ein sehr sicheres Handhabungssystem, eine relativ hohe Dosiergenauigkeit für den Schmelzenstrom und besondere Maßnahmen für Notfälle, beispielsweise einen Stromausfall.

Die oben genannte Patentschrift diskutiert eine im Stand der Technik vielfach eingesetzte Stopfenstange oder Ventilstange mit einem kugeligem Dichtkörper am Schmelzenausgang als nachteilig für eine präzise und ausreichend sichere Dosierung, da eine Verunreinigung der mechanischen Kontaktflächen zwischen dem kugeligen Dichtkörper und der korrespondierenden Dichtungsfläche am Dosierrohrausgang nicht vermieden werden kann.

Weiter werden in der oben genannten deutschen Patentschrift sogenannte kontaktlose Schmelztransportmöglichkeiten und Dosiermöglichkeiten als nachteilig diskutiert. Dabei soll der Förderstrom der flüssigen Schmelze genau gestoppt und wieder in Gang gebracht werden, indem im System bestimmte Überdrucke und Unterdrucke vorhanden sind, die den Schmelzestrom entsprechend beschleunigen oder stoppen. Ein Nachteil dieses Standes der Technik besteht darin, dass dabei Schutzgas in relativ großem Umfang in der Anlage bewegt werden muss, wobei die Schutzgasströme durch entsprechende Magnetventile gesteuert werden. Der Nachteil dabei ist unter anderem, dass Schutzgas im allgemeinen teuer und umweltschädlich ist sowie Krebs erregen kann. Daher ist es für die in unmittelbarer Umgebung einer entsprechenden Anlage arbeitenden Personen nicht wünschenswert, mit dem Schutzgas näher in Kontakt zu kommen. Ein weiterer Nachteil bei der Verwendung von solchen druckgasgesteuerten Systemen ist, dass der Schmelzenstrom aufgrund seines relativ hohen spezifischen Gewichtes im Verhältnis zum Druckgas nur relativ unpräzise gesteuert werden kann.

Ein weiterer Nachteil besteht darin, dass die druckgasgesteuerten Systeme nur bedingt geeignet sind, um den Schmelzenstrom in einem intermittierenden Betrieb zu fahren, das heißt die Schmelze laufen zu lassen, danach den Strom zu stoppen und wieder neu laufen zu lassen, etc., beispielsweise mit einer Intervalllänge von 10 sek., in denen der Schmelzenstrom läuft. Dies liegt an der Trägheit des Systems. Eine solche intermittierende Betriebsweise ist jedoch insbesondere beim Recyceln von magnesiumhaltigen Schrottteilen erforderlich, um am Ausgang der Anlage eine Einzelabfüllung zu gewährleisten, um barrenartige Gusskörper, in sogenannte Masseln als neue "Rohware" zu erzeugen. Eine Massel wird beispielsweise dadurch hergestellt, dass der Schmelzenstrom mit einem vorgegebenen Volumenstrom 10 Sekunden lang erfolgt, wobei dann die Masselform - auch Kokille genannt - vollständig gefüllt ist, der Volumenstrom danach gestoppt werden muss, die neue, leere Masselform untergelegt und von neuem befüllt werden muss. Auch wenn dies automatisiert erfolgen kann, so erfordert dies doch einen intermittierenden Betrieb oder es läuft recht viel flüssige Schmelze nicht in die neue Masselform.

Ein weiterer Nachteil ist darin zu sehen, dass bei anderen Systemen, die ohne eine Druckgassteuerung auskommen wollen, Pumpen eingesetzt werden müssen, die die flüssige, sehr heiße Schmelze, bei einer Aluminium-Magnesium-Legierung etwa 680°C, befördern. Wenn aufgrund der hohen mechanischen und thermischen Beanspruchung eine Pumpe ausfällt, muss die gesamte Anlage gestoppt und der Prozess in nachteilhafter Weise unterbrochen werden.

Die Aufgabe der vorliegenden Erfindung besteht daher darin, eine Vorrichtung zum dosierten Abfüllen von magnesiumhaltigen Schmelzen und ein entsprechendes Verfahren zu schaffen, die eine hinreichend exakte Dosierung auf technisch einfache, robuste und zuverlässige Weise zu ermöglichen.

### Vorteile der Erfindung

Der Gegenstand der unabhängigen Ansprüche 1 und 9 löst diese Aufgabe.

In den jeweiligen Unteransprüchen sind vorteilhafte Ausgestaltungen Weiterbildungen und Verbesserungen des jeweiligen Gegenstandes der Erfindung angegeben.

Um eine hinreichend exakte Dosierung auf technisch einfache, robuste und zuverlässige Weise zu ermöglichen, wird für den Ausgang eines Dosierrohrs, mit dem die flüssige Schmelze abgefüllt wird, ein Ventilsitz für einen Dichtungskörper mit besonderer Geometrie vorgeschlagen, nämlich dass
ein sich verjüngender Abschnitt des Dichtungskörpers im Bereich des Kontakts zu einer Anlagefläche am umgebenden Ventilsitz eine Tangente aufweist, die einen Abdichtwinkel α von 20° +/- 4° zur Längsachse des Dichtungskörpers aufweist, und der sich verengende Endabschnitt am Ausgang des Dosierrohrs im Bereich der Anlagefläche mit der Längsachse des Dichtungskörpers einen Verjüngungswinkel γ von 46° +/-8° zur Längsachse des Dichtungskörpers aufweist.

Ein bevorzugtes Merkmal der vorliegenden Erfindung betrifft die Dosiervorrichtung am Ausgang eines Dosierrohres, das seinerseits mit einem gewissen Vorratsvolumen an flüssiger Schmelze eingangsseitig verbunden ist, beispielsweise in einem als Dosierofen benutzten Schmelzofen befindlich ist, wobei ein Rohrendstück am Dosierausgang vorhanden ist, das eine deutliche Verengung aufweist, wobei die durch die Verengung vorgegebene Querschnittsgröße des Rohres in Richtung Rohrausgang zunächst immer geringer wird, bis eine Anlagefläche für einen unten beschriebenen Dichtungskörper erreicht ist, und wobei dann stromab der so gebildeten Engstelle sich der Querschnitt des Endrohres wieder etwas aufweitet, um einen möglichst optimalen Ausfluss von dem Rohr in eine Abfüllform zu ermöglichen, wobei möglichst wenig Verwirbelungen oder Schaumbildung auftreten sollen. Schaumbildung in der abgefüllten Schmelze erhöht die Brandgefahr signifikant, zumindest zum Teil aufgrund der vergrößerten Oberfläche und der erhöhten Wahrscheinlichkeit, dass Sauerstoff in relativ hoher Konzentration an die Grenzfläche zur noch heißen Aluminium-Magnesium- Schmelze gelangt.

Weiter ist der oben erwähnte Dichtungskörper im Inneren des Rohrendstückes vorgesehen, der zumindest einen enger werdenden, winklig zulaufenden Abschnitt aufweist, und der bei Betrieb in Richtung der Rohrachse beweglich ist und mit einer am Rohrendstück vorgesehenen Abdichtkante - oben als "Anlagefläche bezeichnet - eine dichtende Anlage erzeugen kann, wodurch die flüssige und brennbare Magnesium-Aluminiumschmelze relativ tropfsicher und fein dosierbar abgefüllt werden kann und gleichzeitig eine hohe Standzeit der beteiligten Anlagenkomponenten erreichbar ist.

Der Dichtungskörper weist hierfür bevorzugt einen konusförmigen Abschnitt auf, damit er bei entsprechender Lage den Rohrausgang komplett verschließen kann, wodurch eine Geschlossen-Stellung dieses Rohrendstückes erreicht wird. Gleichzeitig gibt der Dichtungskörper in einer Offen-Stellung einen gewissen Rohrquerschnitt als Durchflussquerschnittsfläche frei, wodurch die Schmelze aus dem Rohr abströmen und abgefüllt werden kann. In bevorzugter Weise hat das Rohr einen runden Querschnitt, ebenso wie das sich konusförmig verengende Endstück des Rohres.

Der Dichtungskörper sitzt also im Betrieb innerhalb des sich verengenden Ausgangsabschnitts des Rohrendstücks und fällt automatisch durch die Wirkung der Schwerkraft in seine Geschlossen-Stellung. Dies trifft zu, auch wenn er vom Schmelzenstrom umgeben ist und zumindest zum Teil in Schmelze schwimmt. Aus diesem Grunde ist er aus einem Material mit erheblich höherer Dichte als derjenigen der Schmelze.

Erfindungsgemäß wird eine relativ große Wichtigkeit für die Abdichtung der Geometrie der abdichtenden Flächen zugemessen.

Ist der vorzugsweise konisch verlaufende Dichtungskörper mit einem Winkel α von nur 10° zur Rohrachse versehen - entsprechend einem Konuswinkel 2α von 20° - und wird ein abgerundeter Verlauf der Kontur der korrespondierenden Abdichtfläche der inneren Rohrfläche angenommen, so ergibt sich, dass der Konus so spitz ist, dass eventuell an der Dichtfläche vorhandene Verunreinigungen, also feste Partikel, beim Andrücken des Konus an die ihn umgebende Kontaktfläche nach oben verdrängt werden und die Dichtheit gegeben ist.

Der Nachteil eines sehr spitzen Konus ist aber, dass der freigegebene Ringraum auf relativ weiter vertikaler Strecke durch den Dichtungskörper eingeengt wird, was die Strömung behindert. Außerdem muss ein spitzer Konus relativ weite Strecken gehoben und gesenkt werden, um von der Dichtstellung in eine Offenstellung zu kommen, die einen angemessen großen Durchfluss zulässt.

Weitere Nachteile eines sehr spitz zulaufenden Konus sind ein geringeres Gewicht des Dichtungskörpers, das sich nachteilhaft auf die Dichtfunktion auswirkt, dass die Klemmgefahr bezüglich einer Verklemmung des Dichtkörpers in dem Ventilsitz ansteigt, dass der Verschleiß relativ hoch ist, und dass die Fertigung schwieriger ist.
Vorteilhaft wäre jedoch das laminare Fließverhalten, wenn der Dichtungskörper einigermaßen spitz ist, das heißt, in einem Bereich des Konuswinkels von etwa 30 bis 50°.

Andererseits besteht bei einem recht stumpfwinkligen Konus von beispielsweise 70° zur Rohrachse ( entsprechend einem Konuswinkel von 140° ) leider kaum noch ein Verdrängungspotential gegen störende Partikel an der Dichtfläche. Stattdessen würden diese bei einer Anlage der beiden Teile aneinander nur verquetscht, was zu Undichtigkeiten führt. Dafür wird nur ein geringer Hub benötigt, um den Weg frei zu machen, und der Fließweg wird nur auf kürzerer Strecke durch den Dichtungskörper behindert.
Ein weiterer Nachteil bei einem sehr stumpfen Konus wäre ein ungünstiges Strömungsverhalten.
Weitere Vorteile wären jedoch ein geringerer Verschleiß, eine leichtere Fertigung und ein entsprechend höheres Gewicht.

Obwohl man also annehmen sollte, dass sich ein relativ spitzer Abdichtwinkel α der Dichtfläche des Dichtungskörpers relativ zu seiner Längsachse im Bereich der dichtenden Anlage besonders gut eignen sollte, um Dichtheit zu gewährleisten, hat sich überraschenderweise herausgestellt, dass Winkel α um die 20° herum, entsprechend einem Konuswinkel von etwa 40° besonders gut geeignet sind, um die oben genannten Ziele zu erreichen.

Mit Bezug zu den Formulierungen in den Ansprüchen, wenn der sich verjüngende Abschnitt des Rohrendstücks stromauf der Anlagefläche einen Winkel γ von 46° +/- 8° zur Längsachse des Dichtungskörpers aufweist, dann ergeben sich gute Standzeit- und Abdichtergebnisse.
Ein Winkelbereich γ von 46° +/- 4° liefert noch bessere Ergebnisse, und Winkel γ von 46° +/- 2° liefern die besten getesteten Ergebnisse, jeweils zusammen mit einem Konuswinkel α des Dichtungskörpers von etwa 20°. Ist der Winkel γ zu groß, so bilden sich beim Anfahren des Abfüllvorgangs zu große Verwirbelungen in der Schmelze.

Der Dichtungskörper hat nun in weiterer, erfindungsgemäß ausgebildeter Weise an seinem dem Rohrausgang zugewandten Ende einen länglichen Fortsatz, auch als "Spike" bezeichnet, der im Betrieb des Abfüllens einer Schmelze an den Boden eines Abfüllbehälters anschlagen kann, wodurch er bei weiterer Absenkung des ihn umgebenden Rohres den ringförmigen Durchflussraum auf jeden Fall öffnet. Wird das Rohr nun angehoben, so ist dieser Fortsatz nicht mehr im Anschlag zum Boden des Auffangbehälters, sondern frei von diesem. Dadurch fällt er durch sein Eigengewicht in den korrespondierenden Innenkonus des Rohrendstückes und verschließt dieses.

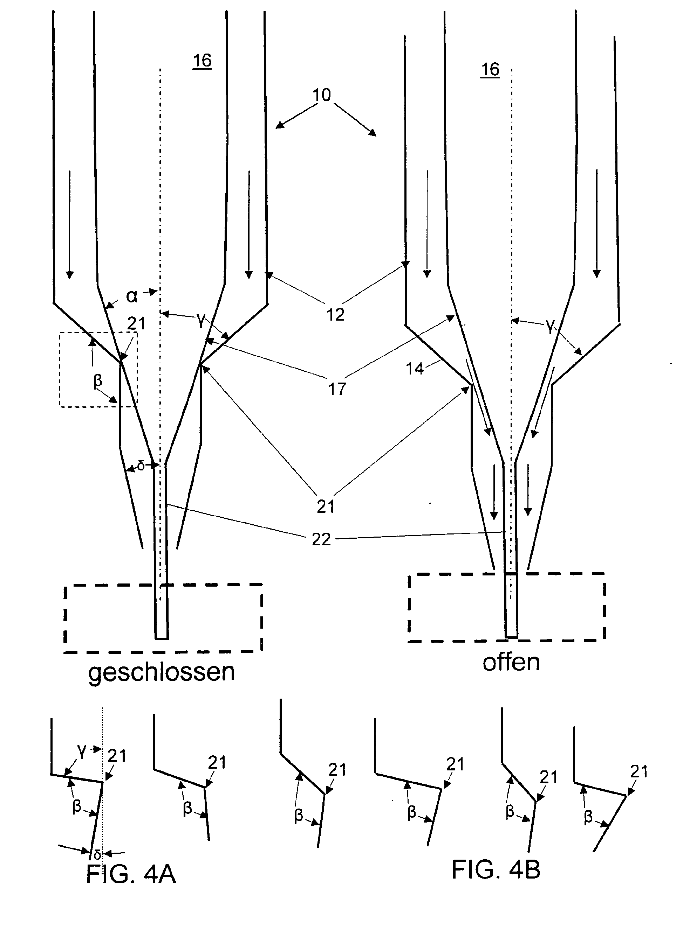

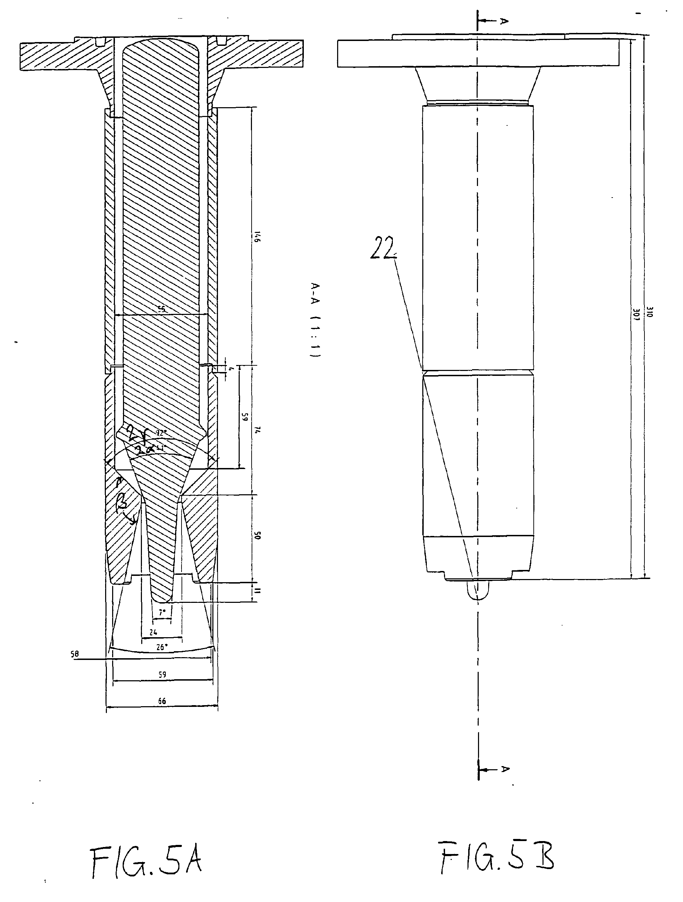

In vorteilhafter Weise ist die innere Abdichtfläche des Rohrendstückes - im Querschnitt gesehen, wie etwa in Figur 4A, 4B oder 5A erkennbar - als ein schulterförmiger Innenabschnitt ausgebildet, der mit seinen beiden Schulterarmen den Winkel β einschließt und eine relativ eng begrenzte Abdichtkontur zwischen Rohrendstück und Dichtungskörper bildet, zumindest dann, wenn der Dichtungskörper eine konusförmige Kontur besitzt. Dies hat den Vorteil, dass sich besonders wenige Verunreinigungen innerhalb der nur sehr kleinen Abdichtfläche bilden können.

Der oben als sich etwas aufweitend erwähnte Querschnitt des Endrohres stromab der Engestelle für die Dichtung kann durch einen Aufweitungswinkel δ beschrieben werden, der zur Rohrachse gemessen wird. Um einen möglichst optimalen Ausfluss der etwas zähflüssigen Schmelze zu bekommen, liegt der Aufweitungswinkel im Bereich von 13° +/- 1°, wenn der oben genannte Fortsatz ("Spike") einen Konuswinkel von bis zu etwa 4° ( zur Rohrachse also 2°) besitzt. Wenn der Spike zylindrisch ist, dann kann der Aufweitungswinkel entsprechen etwas größer sein. Ist der Winkel deutlich zu gering, so fließt die Strömung zu langsam, weil die Reibung zu groß wird. Ist der Aufweitungswinkel etwas zu gering, so fließt die Strömung zu schnell, und es bilden sich Blasen und Schaum beim Abfüllen. Ist der Aufweitungswinkel zu groß, dann reißt die Strömung zwischen den Wänden von Spike und umgebendem Endrohr ab, und es bilden sich Verwirbelungen, die ihrerseits ebenfalls Schaum bilden, wenn abgefüllt wird.

Selbst unter Schutzgasatmosphäre kann beim Abfüllen der Schmelze Sauerstoff hinzutreten, gerade dann, wenn die Anlage intermittierend gefahren wird und das Dosierendstück gewartet werden soll. Dann kann jeglicher Tropfen der heißen Aluminium-Magnesium-Schmelze zu einem Brand führen. Daher ist exaktes Abfüllen ohne Tröpfeln und Schaumbildung extrem wichtig.

In weiter bevorzugter Weise ist die Dosiervorrichtung das Endstück eines Abfüllrohres, das seinerseits im Betrieb mit einem stromauf liegenden Schmelzofen vorgesehen ist, und wobei die Rohrverbindung im Betrieb eine kommunizierende Röhre darstellt, in der die Schmelze sich bewegt aufgrund der Höhendifferenz zwischen Ansaugniveau und Auslassniveau. Wenn das Rohr erst einmal befüllt ist, ohne dass Luft oder Schutzgas darin enthalten ist, sondern ausschließlich Schmelzmaterial, kann die Dosiervorrichtung ohne Pumpe betrieben werden. Gleichfalls kann auch auf eine Druckgassteuerung verzichtet werden, wie sie eingangs als nachteilhaft geschildert wurde. Damit ist eine sehr robuste, wenig störungsanfällige Steuerung gegeben, die darauf beruht, dass das Abfüllrohr einfach angehoben wird, um den Schmelzstrom zu stoppen und wieder abgesenkt wird, um den Schmelzstrom wieder in Gang zu setzen. Das Abfüllrohr weist in seiner Wandung eine elektrische Heizeinrichtung auf, um das darin befindliche Material heiß zu halten, damit es flüssig bleibt.

Gemäß einem weiteren Aspekt der vorliegenden Erfindung wird eine Magnesiumrecyclinganlage offenbart, die geeignet ist, um auch größere Schrottteile aus einer Magnesium enthaltenden Legierung wieder einzuschmelzen, insbesondere aus einer Aluminium-Magnesium-Legierung bestehende Schrottteile. Die erfindungsgemäße Magnesiumrecyclinganlage weist dafür eine Vorwärmstrecke auf, innerhalb derer die Schrottteile getrocknet werden, da sie oft mit Feuchtigkeits- oder Ölrückständen behaftet sind, wenn sie recycelt werden sollen.
In vorteilhafter Weise mündet die Vorwärmstrecke in ein Weichenstück, das einen Mechanismus aufweist, der die vorgewärmten Schrottteile wechselweise einem oder dem anderen von zwei separat vorgesehenen Schmelzöfen zuführen kann. Diese beschicken beide einen weiter stromab stehenden Dosierofen, der als Puffer vor der eigentlichen Abfüllvorrichtung angeordnet ist. Dies hat den Vorteil, dass insbesondere bei der Verwendung von relativ kleinen Schmelzöfen und relativ großvolumigen Schrottteilen bei unterbrechungsfreiem Betrieb der Recyclinganlage zumindest immer einer der beiden Schmelzöfen ein zumindest ansatzweise homogenes Temperaturprofil aufweist, da aufgrund der wechselweisen Befüllung der Schmelzöfen mit frischen, vorgewärmten Schrottteilen eine längere Zeit zur Verfügung steht, um das Schrottteil vollständig zu schmelzen und auf ein einheitliches Niveau der Schmelzbadtemperatur zu bringen. Der weiter stromab der beiden Schmelzöfen liegende Dosierofen kann dann über entsprechende, beheizte Rohrverbindungen wechselweise mit Schmelze aus dem einen bzw. dem anderen Schmelzofen beschickt werden. Es wird eine relativ hohe Betriebssicherheit der Anlage erreicht, weil die Anlage auch kurzfristig weiterbetrieben werden kann, wenn einmal einer der beiden Schmelzöfen ausfallen sollte. Gleichzeitig müssen die Schmelzöfen selbst bei Beschickung mit relativ großvoluminösen Teilen nicht besonders groß ausgebildet werden, was weiter die Kosten senkt. Ein Schmelzofen kann damit ein Schmelzenvolumen aufweisen, das nur etwa 20 mal so groß ist wie das durchschnittliche Volumen der Schrottteile.
Wird beispielsweise der Schmelzofen mit Teilen beschickt, die ein Volumen von 2 Litern aufweisen, so kann der Schmelzofen mit einem Gesamtschmelzenvolumen von weniger als 100 Litern immer noch effizient betrieben werden
Eine relativ geringe Dimensionierung der Schmelzofengröße hat den Vorteil, dass die Öfen relativ kurze Anfahrzeiten haben, bis sie auf Betriebstemperatur sind.

Gemäß einem tragenden, verfahrensbezogenen Aspekt der vorliegenden Erfindung wird ein Verfahren zum Abfüllen einer flüssigen Schmelze offenbart, das insbesondere für magnesiumhaltige Schmelzen eingesetzt werden kann, das durch folgende Schritte gekennzeichnet ist:
a. Leiten der flüssigen Schmelze aus einem Dosierofen durch eine Rohrleitung mit einem Dosierausgang,
b. wobei der Eingang der Rohrleitung unter dem Schmelzenspiegel im Dosierofen und oberhalb des Dosierausgangs befindlich ist und wobei die Rohrleitung beim Abfüllen im wesentlichen frei ist von Luft oder Schutzgas, so dass die Schmelze durch die statische Druckdifferenz resultierend aus dem Höhenunterschied zwischen Rohreingang und Dosierausgang gefördert wird. Die statische Druckdifferenz ist durch eine entsprechende Höhendifferenz so einzustellen, dass der Schmelzenstrom bei der bevorzugten Betriebstemperatur für die Schmelze eine geeignete Fließgeschwindigkeit hat.

Wird nun die Rohrleitung angehoben, so dass der Dosierausgang auf einem höheren Niveau liegt, so verlangsamt sich der Schmelzenstrom entsprechend und kann zum Stoppen und bei entsprechender weiterer Anhebung sogar zum Rückströmen gebracht werden, ohne dass es bestimmter Pumpen bedarf, die ein entsprechendes Druckgefälle in Strömungsrichtung aufbauen, wie es im Stand der Technik notwendig ist. Dies vereinfacht das Verfahren erheblich, weil der Prozess ohne solche Pumpen auskommt und somit wartungsanfällige Teile des Prozesses wegfallen. Dieses Prinzip der kommunizierenden Röhren kann nicht nur zum Abfüllen einer flüssigen Schmelzen, sondern auch allgemein zum Transport zwischen zwei bestimmten Orten einer Transportstrecke für flüssige Schmelze verwendet werden. Dieses Verfahren ist auch nicht beschränkt auf die Verwendung für magnesiumhaltige Schmelzen, wie der Fachmann sofort erkennt.

### Zeichnungen

Anhand der Zeichnungen werden Ausführungsbeispiele der Erfindung erläutert.
Figur 1 zeigt eine Aluminium-Magnesiumrecyclinganlage gemäß einem bevorzugten Ausführungsbeispiel in einer Übersichtsdarstellung,
Figur 2 zeigt in einer schematischen Ansicht einen Teilausschnitt aus einer Magnesiumrecyclinganlage mit einem bevorzugten Merkmal des wechselweise Beschickens zweier verschiedener Schmelzöfen mit vorgewärmten Schrottteilen aus einer Aluminium-Magnesium-Legierung bestehend,
Figur 3 zeigt schematisch zwei Vorrichtungen zur Durchführung eines erfindungsgemäßen Verfahrens, bei dem eine flüssige Schmelze durch eine kommunizierende Röhre zwischen zwei Punkten transportiert wird,
Figur 4A zeigt eine erfindungsgemäße Dosiervorrichtung für eine flüssige Schmelze gemäß einem bevorzugten Ausführungsbeispiel zur Verwendung in einer Magnesiumrecyclinganlage, wobei sich die Dosiervorrichtung in einer Geschlossen-Stellung befindet;
Figur 4B zeigt die Anordnung gemäß Figur 4A in einer Offen-Stellung;
Figur 5A zeigt eine Variante der Anordnung aus Figur 4A in einer Schnittdarstellung in der Geschlossen-Stellung,
Figur 5B zeigt die Anordnung aus Figur 5A in einer Ansichtsdarstellung.

### Beschreibung von Ausführungsbeispielen

In den Figuren bezeichnen gleiche Bezugszeichen gleiche oder funktionsgleiche Komponenten.

Die gezeigte Aluminium-Magnesium-Recyclinganlage ist dazu geeignet, Bauteile aus einer Aluminium-Magnesium-Legierung, wie sie im Automobilbereich sehr häufig vorkommen, in Form von Getriebegehäusen, Kupplungsgehäusen, Kurbelwellengehäusen, Zylinderkopfbauteilen, etc., zu schmelzen und die Schmelze in sogenannte Masseln umzuformen, die dann als Rohware, gegebenenfalls unter Einschaltung weiterer Zwischenschritte, einem erneuten Gießprozess für die Herstellung ähnlicher Bauteile zur Verfügung gestellt werden können.

Die Magnesium-Recyclinganlage ist als Ganzes mit Bezugszeichen 100 versehen und vorzugsweise in einer geschlossenen Halle untergebracht. Typische Abmessungen der in der Anlage verwendeten Schrott-Teile sind etwa 30 cm x 40 cm x 40 cm. Die gesamte Anlage kann frei dimensioniert werden, um entweder deutlich kleinere oder deutliche größere Teile zu verarbeiten.

Nach einer oberflächlichen Reinigung der Magnesium-Aluminium-Schrottteile werden diese auf einer, aus einer Mehrzahl von einzelnen Vorwärmkammern bestehenden Vorwärmstrecke 110 auf eine Temperatur von etwa 100°C gebracht. Dies geschieht in bevorzugter Weise, indem die Teile vereinzelt werden und jeweils einzeln auf einem Transportband befindlich von einer Vorwärmkammer zur nächsten Vorwärmkammer transportiert werden, wobei sie sich in jeder Kammer eine gewisse, vorher bestimmte Zeit aufhalten, um deren Temperatur anzunehmen.
Die Vorwärmstrecke 110 besteht beispielsweise bevorzugt aus drei einzelnen Kammern, wobei die eine Kammer das Teil von Umgebungstemperatur auf 40°C, die zweite Kammer das Teil auf 80°C, und die dritte Kammer das Teil auf etwas über 100°C erwärmt. In dem gezeigten Ausführungsbeispiel ist die Vorwärmstrecke so angeordnet, dass die Teile von unten nach oben transportiert werden, damit sie in späteren, weiteren Prozessen in der Anlage von selbst durch Wirkung der Schwerkraft wieder nach unten befördert werden können. Wenn ein Schrottteil die genannte obere Temperatur nicht erreichen sollte, dann wird es als Ausschuss aus dem Prozess zunähst ausgeschieden und kann diesem später wieder zugeführt werden.

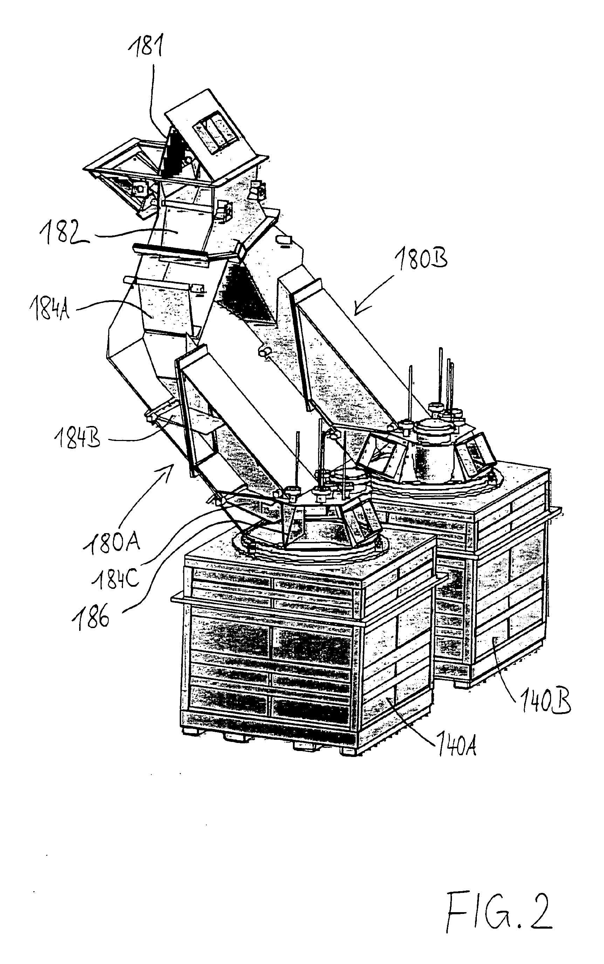

Befindet sich ein Schrottteil nun in der obersten und wärmsten Vorwärmkammer, so wird es, wenn es die Solltemperatur erreicht hat, in einer geschlossenen Kammer mittels eines kurzen Transportbandes zu einer Weichenanordnung 120 transportiert. Die Weiche 120 befüllt wechselweise abwechselnd zwei verschiedene Schmelzöfen 140A und 140B, damit die Temperatur der in den Schmelzöfen befindlichen Schmelze nicht zu sehr gesenkt wird, wenn ein neues Schrottteil in einen jeweiligen Ofen 140 gelangt. Die Weiche samt einem Teile-Befüllrohr mit den zugehörigen Schmelzöfen ist in Figur 2 näher dargestellt.

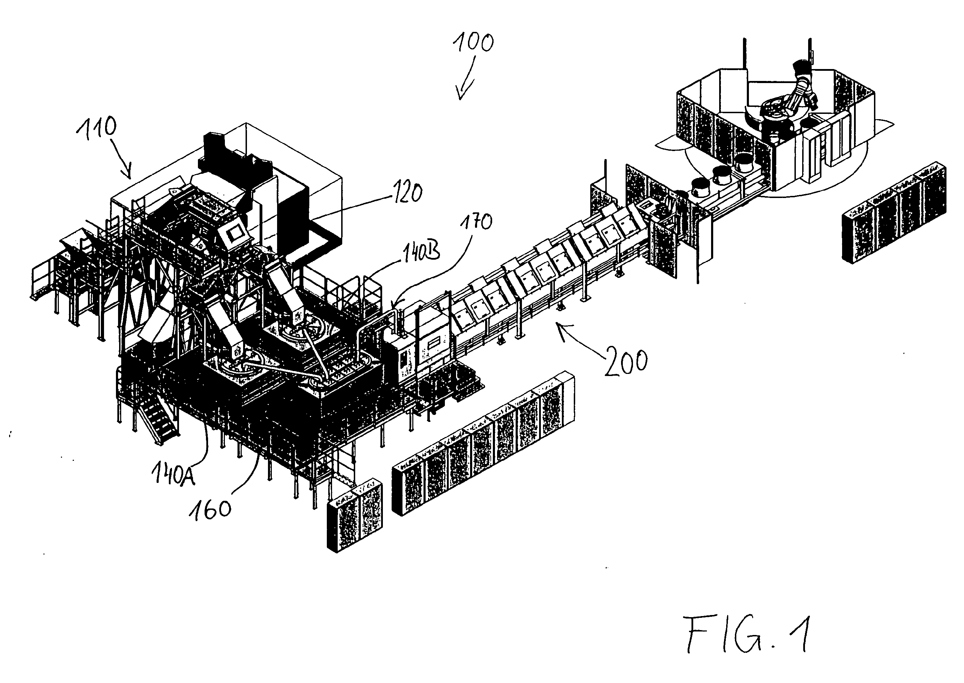

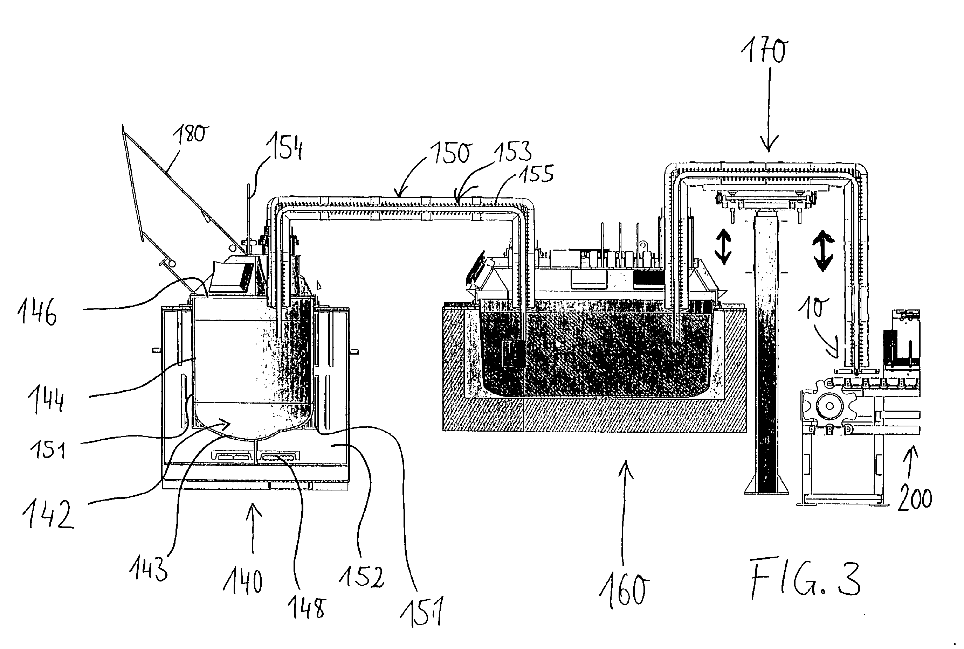

Die Schmelzöfen 140A und 140B stellen eine möglichst homogen temperierte, flüssige Aluminium-Magnesium-Schmelze her und dienen als Vorstufe für einen Dosierofen 160, der seinerseits als Reservoir für den eigentlichen Abfüllvorgang der flüssigen Schmelze in die Massel-Formen dient. Der Dosierofen 160 wird daher von beiden Schmelzöfen 140A und 140B über ein jeweiliges Überführrohr (150 in Figur 3) beschickt, die jeweils als Tauchrohre ausgebildet sind. In bevorzugter Weise wird hierbei das Prinzip von kommunizierenden Röhren ausgenutzt und die flüssige Schmelze von oben nach unten ohne Pumpe transportiert. Deshalb liegen beide Schmelzöfen auf einem Podest etwas höher als der stromab angeordnete Dosierofen 160, siehe Figur 1.

Den Ausgang des Dosierofens bildet ein so genanntes Dosierrohr 170, das in besonderer Weise geformt ist und in besonders bevorzugter Weise ein erfindungsgemäßes Rohrendstück aufweist, das in Figur 4a und 4b in seiner Funktion geschlossen bzw. offen skizziert ist. Der Dosierofen 160 mit seiner Beschickung aus den Schmelzöfen 140 und seinem Ausgang zu der erfindungsgemäßen Dosiervorrichtung ist in Figur 3 näher dargestellt.

Mit weiterem Bezug zu Figur 2, die weitere Details der erfindungsgemäßen Weichenanordnung zeigt, ist der Eingang, also der Befülleingang für die Weichenanordnung, oben in der Zeichnung dargestellt. In diesem gezeigten Ausführungsbeispiel ist der Eingang so konzipiert, dass Schrottteile von oben kommend auf eine erste Eingangsklappe 181 fallen. Diese Eingangsklappe 181 kann geöffnet und geschlossen werden. In ihrer Offen-Stellung kann das Schrottteil (nicht dargestellt) nach unten auf die so genannte Weichenklappe 182 fallen, die zwei Stellungen einnehmen kann. In einer ersten Stellung leitet sie das Schrottteil in das erste Teile-Befüllrohr 180a, wogegen in ihrer zweiten Stellung das Schrottteil bei offener Eingangsklappe 181 in das zweite Teile-Befüllrohr 180b geleitet wird.

Beide Teile-Befüllrohre sind im wesentlichen gleich aufgebaut: In ihrem Inneren sind Bremsklappen 184a und 184b sowie 184c angeordnet, die durch den Druck eines pneumatisch arbeitenden Zylinders in einer Geschlossen-Stellung gehalten sind. Gemäß einer programmierten Steuerung wird der pneumatische Druck ca. im 30-Sekunden-Takt abgebaut. Durch das Gewicht des aufliegenden Schrotteils öffnet sich die Klappe und das Schrottteil kann im Rohr bis zu einer optional vorhanden, nächsten Bremsklappe weiter durchrutschen bzw. durchgleiten oder durchfallen, je nach dem, in welchem Winkel das Teile-Befüllrohr gegenüber der Horizontalen angeordnet ist.

Eine bevorzugte Implementation einer Füllstandsregelung für die Schmelzöfen 140 enthält jeweils ein oberhalb der Schmelze, etwa am oberen, maximalen Füllstandslevel endendes offenes Rohr, durch das Gas (bevorzugt sauerstoffarmes Schutzgas) in den Schmelzofen im Raum oberhalb der Schmelze eingeblasen wird. Steigt nun der Spiegel der Schmelze, liegt das Ausgangsende des Rohrs unterhalb des Schmelzenspiegels. Damit steigt jedoch der Druck, den man aufbringen muss, um den Gasdurchlauf konstant zu halten. Dieser Druckanstieg wird sensorisch erfasst und ein Signal erzeugt, dass die Zufuhr neuer Schrottteile temporär stoppt.

Am Ausgang jedes der beiden Teile-Befüllrohre befindet sich eine weitere Verschlussklappe 186, die, wenn sie sich in ihrer Offen-Stellung befindet, das Aluminiumschrottteil aus geringer Höhe in den zugehörigen Schmelzofen 140a bzw. 140b fallen lässt. Ist die Verschlussklappe 186 in ihrer Geschlossen-Stellung, dann kann das Schrottteil nicht in den Schmelzofen gelangen.

In einer bevorzugten Ausführungsform der dargestellten Weichenanordnung und der erfindungsgemäßen Magnesium-Recyclinganlage sind sämtliche Klappen durch ein Steuerungsprogramm vollautomatisch gesteuert. Auf die Eingangsgrößen der Steuerung, die auch einzelne Regelkreise beinhalten kann, wird weiter unten eingegangen.

Mit Bezug zu Figur 3 enthält jeder der beiden Schmelzöfen 140a und 140b einen Schmelztiegel 142. Jeder der Schmelztiegel 142 weist einen Tiegelboden 143, eine Tiegelwand 144 sowie einen Tiegeldeckel 146 auf und bildet ein geschlossenes Ganzes, das nur ganz bestimmte Öffnungen besitzt, die noch weiter beschrieben werden. Der Tiegel ist nach unten hin und zu den Seiten hin umgeben von einem Isoliergehäuse 152.

In diesem Gehäuse 152 befinden sich elektrische Heizelemente am Boden, siehe Heizelement 148, sowie eine gewisse, vorgegebene Anzahl von Wandheizelementen 151, um die Schmelze durch Erwärmen der Tiegelwand und des Tiegelbodens auf Temperatur zu halten. Der Tiegeldeckel 146 weist eine Befüllöffnung auf, die durch die weiter oben erwähnte Verschlussklappe 186 geöffnet und geschlossen werden kann. Des weiteren ist ein Schutzgasanschlussrohr 154 vorgesehen, um den über dem Schmelzenspiegel vorhandenen Raum gezielt mit einem geeigneten Schutzgas füllen zu können. Des weiteren ist ein Überführrohr 150 vorgesehen, dessen Eingang unterhalb des Schmelzenspiegels im Schmelzofen liegt, damit die flüssige Schmelze durch dieses Überführrohr hindurch in den weiter stromab angeordneten Dosierofen 160 transportiert werden kann.

Der Dosierofen 160 kann tiefer stehen, als der Schmelzofen 140, damit nach einem einmaligen Ansaugvorgang eine kontinuierliche Strömung einsetzt, die das Bestreben hat, die beiden Spiegel im Schmelzofen und im Dosierofen auf die gleiche Höhe zu bringen.

Der Schmelzofen hält eine Temperatur der Schmelze von etwa 680°C.

In bevorzugter Weise kann die Wandheizung 151 getrennt von den Elementen der Bodenheizung 148 an- und ausgeschaltet werden, um bei Bedarf die Schmelze auf einer geringeren Temperatur zu halten. Dies empfiehlt sich insbesondere bei längeren Betriebspausen der Anlage.

Mit weiterem Bezug zu Figur 3 verbindet das oben genannte Überführrohr 150 einen Schmelzofen 140a mit dem Dosierofen 160. Der Dosierofen 160 weist hierfür eine entsprechende Öffnung auf, in die das Ende des Überführrohrs 150 einmündet. Für die Verbindung vom zweiten Schmelzofen 140b ist ebenfalls ein solches Überführrohr 150 vorgesehen, sowie eine entsprechende Öffnung im Dosierofen 160 vorhanden, in Figur 3 jedoch nicht gezeigt. Das Überführrohr 150 ist von einem Isoliergehäuse 153 umgeben, das seinerseits ebenfalls eine elektrische Beheizung enthält, indem entsprechende Heizelemente 155 in bevorzugt paralleler Schaltung, um die Ausfallsicherheit zu erhöhen, über die gesamte Mantelfläche des Überführrohrs verteilt angeordnet sind.

Der Dosierofen 160 befindet sich als Ganzes in einer Sicherheitswanne 162, die vorgesehen ist, um bei Notfällen zu verhindern, dass eventuell aus dem Dosierofen austretende flüssige Schmelze unkontrolliert in die Halle hineinfließen kann. Der Dosierofen 160 hat im wesentlichen den gleichen, grundsätzlichen Aufbau wie jeder der beiden Schmelzöfen 140a und 140b, wie sie oben beschrieben wurden. Auch hier sind Anschlussrohre 164 vorgesehen, um den Raum oberhalb der Schmelze zu entlüften und bei Bedarf mit Schutzgas zu befüllen.

Gemäß Figur 3 und bevorzugtem Ausführungsbeispiel wird flüssige Schmelze aus dem Dosierofen 160 über ein Dosierrohr 170 entnommen. Das Dosierrohr ist im wesentlichen wie das Überführrohr 150 aufgebaut, funktioniert ebenfalls in bevorzugter Weise nach dem Prinzip der kommunizierenden Röhren, enthält aber am stromabseitigen Ende eine besondere Dosiervorrichtung 10 mit einem besonderen, erfindungsgemäß ausgebildeten Rohrendstück, das in Figur 4 näher beschrieben ist.
Das gesamte Dosierrohr 170 ist gemäß diesem bevorzugten Ausführungsbeispiel der Magnesium-Recyclinganlage senkrecht nach oben und unten verfahrbar gelagert, siehe Pfeile in Figur 3 rechts. Das Dosierrohr 170 mit der erfindungsgemäßen Dosiervorrichtung 10 dient dazu, die flüssige Schmelze in leere Kokillen abzufüllen und zu portionieren, um die vorerwähnten, sogenannten Masseln als Rohmaterial anderen Prozessen, insbesondere Gießprozessen, zur Verfügung zu stellen.

Dazu ist es erforderlich, den Ausgang des Dosierrohres 170, also das Rohrendstück 12, kurzzeitig zu verschließen und dann wieder zu öffnen, um die flüssige Schmelze von einer Kokille in die andere bringen zu können, ohne dabei flüssiges Schmelzmaterial außerhalb der Kokillen zu "verkleckern".

Dazu dient in besonderer Weise ein erfindungsgemäßer Verschlussmechanismus, der in deutlicher Abwandlung vom Stand der Technik gemäß einem bevorzugten Ausführungsbeispiel in den Figuren 4a und 4b in der Geschlossen- bzw. Offen-Stellung gezeigt ist.

Wie Figur 3 weiter zeigt, befinden sich die Kokillen auf einem Transportband, das die nächste, jeweils leere Kokille unter den Ausgang des Dosierrohres platziert, damit diese weiter befüllt werden kann. Die gesamte Massel-Transportanlage, die mit Bezugszeichen 200 gekennzeichnet ist, befindet sich zumindest zu einem sehr großen Teil in einem geschlossenen Kastenraum, der seinerseits ebenfalls mit Schutzgas befüllt ist, um die Brandgefahr niedrig zu halten. In dem Kastenraum kühlen die Masseln ab. Am Ende der Abkühlstrecke werden die Kokillen geleert, was durch Verwendung eines geeigneten Trennmittels vereinfacht wird, und die Masseln ggf. auf einer Palette gestapelt

Figur 4a und 4b zeigen eine erfindungsgemäße Dosiervorrichtung für eine flüssige Schmelze, insbesondere eine Magnesium-Aluminium-Schmelze gemäß einem Ausführungsbeispiel der vorliegenden Erfindung zur bevorzugten Verwendung in einer Aluminium-Magnesium-Recyclinganlage, mit einigen Geometrievarianten im unteren Teil der Figuren.
Diese Dosiervorrichtung kann jedoch auch zum dosierten Befüllen anderer Schmelzen aus anderem Material verwendet werden. Sie kann auch unabhängig davon nicht nur beim Recyceln von Material, sondern ganz generell beim Abfüllen von Flüssigkeiten im Prinzip jeglicher Art verwendet werden.

Gemäß Figuren 3 und 4 ist ein Rohrendstück 12 am Dosierausgang der Dosiervorrichtung 10 vorhanden, das eine sich verjüngende, innere Randfläche 14 aufweist. Im Beispiel der Zeichnungen verjüngt sich der Querschnitt durch rechteckig verlaufende äußere Begrenzungslinien des Querschnitts sehr unmittelbar von einem ersten größeren auf einen zweiten deutlich kleineren Querschnitt.
In bevorzugter Weise ist die somit gebildete abrupte Verengung des Rohrquerschnitts nun recht deutlich, also nach Art einer Kante ausgebildet, so dass sich die Form einer umlaufenden, kantigen Schulter bildet. Dabei ist der Schulterwinkel mit β bezeichnet. Diese rechtwinkligen Verläufe (β =90°) können auch rohreinwärts geneigt werden, oder auch aus einem Winkelbereich für β von ca. 75° bis ca. 120° stammen, und sie können verschiedene Aufweitungswinkel aufweisen, wie es als Varianten unten in Figur 4A und 4B dargestellt ist.

Weiter ist ein Dichtungskörper 16 im Inneren des Rohrendstückes 12 vorgesehen, der bei Betrieb in Richtung der Rohrachse (strichpunktiert gezeichnet) beweglich ist und der eine solche Form aufweist, dass er bei entsprechender Lage den Rohrausgang komplett verschließen kann. Die bevorzugte Form des Dichtungskörpers 16 ist ein Zylinder, der einen sich verengenden, bevorzugt konusförmigen Abschnitt 17 aufweist. Der Konus dichtet dann zu einem Anlageabschnitt 21 an der Schulter ab, wodurch eine Geschlossen-Stellung dieses Rohrendstückes erreicht wird. Im gezeigten Beispiel aus Figur 4 ist dieser Abschnitt 21 eine kreisförmig umlaufende Kante. Diese Kante kann auch abgerundet ausgebildet sein. Der Konuswinkel α, oben auch als Abdichtwinkel bezeichnet, beträgt bevorzugt um die 20°.

Andererseits gibt der Dichtungskörper 16 in der Offen-Stellung, siehe Figur 4B, einen gewissen, ringförmigen Rohrquerschnitt als Durchflussfläche frei, wodurch die Schmelze aus dem Rohr abströmen kann. In bevorzugter Weise hat das Rohrendstück 12 einen runden Querschnitt, ebenso wie das sich konusförmig verengende Endstück des Rohres.

Der Dichtungskörper 16 sitzt im Betrieb der Anlage innerhalb des Rohrendstücks 12 und fällt bevorzugt automatisch, weiter bevorzugt nur durch die Wirkung der Schwerkraft in seine Geschlossen-Stellung. Dies trifft zu, auch wenn er vom Schmelzenstrom umgeben ist und zumindest zum Teil in Schmelze schwimmt. Aus diesem Grunde ist der Dichtungskörper aus einem Material mit erheblich höherer Dichte als derjenigen der Schmelze. Sein eigener Schmelzpunkt sollte deutlich höher gewählt sein als der der Schmelze.

Der Dichtungskörper hat nun in weiterer, erfindungsgemäß ausgebildeter Weise an seinem dem Rohrausgang zugewandten Ende einen länglichen Fortsatz 22, der im Betrieb des Abfüllens einer Schmelze an den Boden eines Abfüllbehälters 24 - hier eine Kokille, oder Masselform, anschlagen kann, wodurch er bei weiterer Absenkung des ihn umgebenden Rohres den ringförmigen Durchflussraum auf jeden Fall öffnet. Wird das Dosierrohr 170 nun angehoben, so ist dieser Fortsatz nicht mehr im Anschlag zum Boden des Auffangbehälters, sondern frei von diesem. Dadurch fällt er durch sein Eigengewicht in den korrespondierenden Innenkonus des Rohrendstückes 12 und verschließt dieses, siehe Figur 4A.

Die besondere Gestalt der Verengung des Rohrendstücks 12 - mehr oder weniger S-förmig ausgebildet mit einer klaren Kante im Anlagebereich - hat den Vorteil, dass sich bei einer Magnesium-Aluminium-Schmelze besonders wenige Verunreinigungen innerhalb der Abdichtfläche bilden können, weil diese relativ klein ist.

Der Winkel δ ist im Beispiel von Figur 4A und 4B im oberen teil der Figuren negativ, denn es ist keine Aufweitung sondern eine Verengung verwirklicht. Diese Form eignet sich beispielsweise für relativ dünnflüssige Schmelzen.

Figur 5A zeigt eine bevorzugte Variante der Anordnung aus Figur 4A in einer Schnittdarstellung in der Geschlossen-Stellung, und Figur 5B zeigt die Anordnung aus Figur 5A in einer Ansichtsdarstellung.

Mit Bezug zu Figur 5A beträgt der Schulterwinkel β etwa 120°, wobei der stromaufwärts liegende Schulterarm in einem Winkel von etwa 46° gegenüber der Längsachse des Dichtkörpers (der Senkrechten) verläuft, der Konuswinkel im Bereich der Anlagekante 21 beträgt 41°, das heißt, der Abdichtwinkel α beträgt etwa 20°, der doppelte Aufweitungswinkel 2δ des sich nach unten erweiternden Auslassbereichs beträgt 26°, und der als Abstandhalter dienende Fortsatz 22 verjüngt sich mit einem Konuswinkel von 7°.

In weiter bevorzugter Weise ist die Dosiervorrichtung 10 das Endstück eines Abfüllrohres, hier als Dosierrohr 170 bezeichnet, das seinerseits im Betrieb mit einem stromauf liegenden Ofen vorgesehen ist, und wobei die Rohrverbindung im Betrieb eine kommunizierende Röhre darstellt, in der die Schmelze sich bewegt aufgrund der Höhendifferenz zwischen Ansaugniveau und Auslassniveau. Wenn das Rohr erst einmal befüllt ist, ohne dass Luft oder Schutzgas darin enthalten ist, sondern ausschließlich Schmelzmaterial, kann die Dosiervorrichtung ohne Pumpe betrieben werden. Gleichfalls kann auch auf eine Druckgassteuerung verzichtet werden, wie sie eingangs als nachteilhaft geschildert wurde.
Damit ist eine sehr robuste, wenig störungsanfällige und notfallgeeignete Steuerung gegeben, die darauf beruht, dass das Abfüllrohr einfach angehoben wird, um den Schmelzstrom zu stoppen und wieder abgesenkt wird, um den Schmelzstrom wieder in Gang zu setzen. Das Dosierrohr 170 weist in seiner Wandung eine elektrische Heizeinrichtung auf, wie sie weiter oben bereits beschrieben wurde, um das darin befindliche Material heiß zu halten, damit es flüssig bleibt.

Das Material des Dichtungskörpers 16 kann beispielsweise Edel-stahl sein, wenn er für eine Aluminium-Magnesium-Legierungsschmelze verwendet werden soll. In weiter bevorzugter Weise kann die Oberfläche des Dichtungskörpers eine besondere Beschichtung aufweisen, um zu verhindern, dass sich Schmelzenmaterial an den konusförmigen Abschnitt ansetzt und haften bleibt. Das Gleiche gilt für das Material des Rohrendstücks 12.

Die vorliegende Erfindung enthält gemäß einem weiteren, verfahrensbezogenen Aspekt den Gedanken, flüssige Schmelze von einem Punkt einer Anlage zu einem anderen Punkt derselben Anlage durch eine Rohrleitung zu transportieren, wobei keinerlei Pumpe für den Transport der Schmelze verwendet wird, sondern die Schmelze gemäß einem Druckgradienten fließt, der sich allein nach dem Prinzip der kommunizierenden Röhren zwischen einem höher gelegenen Ansaugpunkt des Rohres und einem niedriger gelegenen Abgabepunkt des Rohres ergibt. In der oben beschriebenen Magnesium-Recyclinganlage funktioniert das Überführrohr 150 und das Dosierrohr 170 genau nach diesem Prinzip. Dazu wird die Rohrleitung freigehalten von irgendwelchen Gasen, so dass sich nur Schmelzenmaterial im Inneren der Rohrleitung befindet.

Die Erstbefüllung eines solchen Rohres geschieht dabei in bevorzugter Weise, in dem das Rohr mit seinem horizontal verlaufenden Mittelabschnitt und den beiden rechtwinklig dazu verlaufenden Endabschnitten von den jeweiligen Ofendeckeln abmontiert wird und so gelagert wird, dass die Endabschnitte beide nach oben zeigen. Dann wird flüssige Schmelze manuell mit einer Schöpfkelle in das leere Rohr gefüllt, solange bis es vollständig gefüllt ist. Danach lässt man die Schmelze erkalten, wodurch sie erstarrt. Wenn sie erstarrt ist, wird das gefüllte Rohr wieder auf die Ofendeckel montiert und beide Enden des Rohres werden in die flüssige Schmelze getaucht des jeweiligen Ofens getaucht. Dann wird die Heizung des Rohres eingeschaltet, die erstarrte Schmelze fängt an, sich wieder zu verflüssigen, und die Strömung beginnt zu fließen, wenn die Spiegel der Öfen unterschiedlich hoch sind.

Im Betrieb der Anlage kann nun beispielsweise das stromabseitige Ende des Rohres angehoben werden, um die Strömungsgeschwindigkeit der Schmelze zu verringern. Befinden sich beide Punkte, also Ansaugpunkt und Abgabepunkt, auf derselben Höhe, so ist die Strömungsgeschwindigkeit Null. Der Schmelzenstrom kommt also zum Erliegen. Dieses Merkmal kann in bevorzugter Weise eingesetzt werden, um den Schmelzenstrom auch in Kombination mit dem in Figur 4 gezeigten Verschlussmechanismus auf verlässliche, weil redundante Weise zu steuern. Dabei wird in vorteilhafter Weise ein nur sehr geringer technischer Aufwand betrieben, weil keinerlei Pumpe eingesetzt werden muss, und weil bei dieser Steuerung nicht direkt in den Schmelzenstrom eingegriffen werden braucht.
In weiterer, bevorzugter Weise kann das Anheben des Rohres - entweder allein am stromabseitigen Ende oder auch in Kombination mit dem stromaufseitigen Ende - dazu verwendet werden, eine Notfallschaltung zu installieren, um den Schmelzenstrom schnell unterbrechen zu können. Dazu ist es lediglich erforderlich, einen entsprechenden Sensor in diese Notfallsteuerung einzubauen, der bestimmte Notfälle sensiert. Ein solcher Notfall kann beispielsweise gegeben sein, wenn das Transportband der leeren Kokillen blockiert ist, oder wenn aus irgendeinem Grunde ein Teil der Anlage in Brand geraten ist. Diese Notfallsteuerung kann in besonders bevorzugter Weise auch unabhängig von elektrischem Strom betrieben werden, indem das Dosierrohr über entsprechende Hebelgestänge oder Kettenverbindungen mit entsprechenden Gegengewichten auch von außerhalb der Halle nach oben gebracht werden kann.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Beispielsweise kann die Anzahl der Vorwärmstrecken, ebenso wie die Anzahl der Schmelzöfen 140 in entsprechender Weise variiert werden, je nach dem, wie groß die zu schmelzenden Schrottteile sind, wie groß das Verhältnis der durchschnittlichen Volumen der Schrottteile zu dem durchschnittlichen Schmelzenvolumen in einem Schmelzofen ist und je nach dem wie die Legierungsverhältnisse sind. Anstelle einer Aluminium-Magnesium-Legierung können auch andere, im Stand der Technik verwendete Schmelzen bearbeitet werden. Die erfindungsgemäße Anlage ist jedoch in besonderer Weise für Magnesium enthaltende Legierungen geeignet, weil sie in besonderer Weise der Brandgefährlichkeit von Aluminium-Magnesium-Legierungen Rechnung trägt.

Die beschriebene Dosieranlage kann zum dosierten Abfüllen jeglicher Flüssigkeit verwendet werden. Sie eignet sich jedoch besonders zum Abfüllen von zäh fließenden Flüssigkeiten mit relativ hoher Dichte, daher besonders für metallhaltige Schmelzen, und besonders wenn sie brennbar sind.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind. Dies gilt im Besonderen für die genannten Winkel, solange ein ausreihender und ruhiger, turbulenzarmer Durchfluss gewährleistet ist.

## Patentansprüche

1. Dosiervorrichtung (10) zum dosierten Abfüllen einer Magnesium enthaltenden Schmelze, bevorzugt einer Schmelze, die eine Aluminium-Magnesium-Legierung enthält und in einer Magnesium-Aluminium-Recyclinganlage (100) befindlich ist, mit:
a) einem Rohrendstück (12) mit einer sich stromabwärts verjüngenden, dem Ausgang zugeordneten inneren Randfläche (14),
b) einem im Betrieb der Anlage parallel zur Achse des Rohrendstücks beweglichen Dichtungskörper (16), der zumindest einen sich verjüngenden Abschnitt (18) aufweist, dessen Mantelfläche so dimensioniert ist, dass er in einer Geschlossen-Stellung der Vorrichtung an einer Anlagefläche (21) der inneren Randfläche (14) dichtend anliegen kann, und in einer Offenstellung einen Durchflussraum (20) freigibt,
c) wobei der Dichtungskörper (16) einen Abstandhalter (22) aufweist, der bei Bewegung des Rohrendstücks (12) nach unten eine Anschlagstellung einnimmt, die die Lage des Dichtungskörpers (16) in seiner Offenstellung definiert,
d) wobei die Anlagefläche (21) eine um die Längsachse des Dichtungskörpers umlaufende Dichtungskante bildet, **gekennzeichnet dadurch dass**
e) der sich verjüngende Abschnitt (17) des Dichtungskörpers (16) im Bereich des Kontakts zur Anlagefläche (21) eine Tangente aufweist, die einen Abdichtwinkel α von 20° +/-4° zur Längsachse des Dichtungskörpers bildet. und
f) die innere Randfläche (14) stromauf der Anlagefläche (21) mit der Längsachse des Dichtungskörpers (16) einen Verjüngungswinkel γ von 46° +/- 8° bildet.

2. Dosiervorrichtung nach Anspruch 1, wobei der sich verjüngende Abschnitt (18) des Dichtungskörpers (16) konusförmige Gestalt besitzt.

3. Dosiervorrichtung nach Anspruch 1, wobei der Verjüngungswinkel γ Werte von 46° +/- 4° zur Längsachse des Dichtungskörpers annehmen kann.

4. Dosiervorrichtung nach dem vorstehenden Anspruch, wobei der Abdichtwinkel α Werte von 20° +/- 2° zur Längsachse des Dichtungskörpers annehmen kann.

5. Dosiervorrichtung nach Anspruch 1, wobei der Verjüngungswinkel γ Werte von 46° +/- 2° zur Längsachse des Dichtungskörpers annehmen kann.

6. Dosiervorrichtung nach Anspruch 1, wobei der Abstandhalter (22) eine längliche, zylindrische oder konusförmige Gestalt aufweist mit einem Konuswinkel von 8° oder geringer, und das Rohrendstück (12) im Bereich des Auslasses in leicht aufgeweiteter Form vorgesehen ist, und wobei ein Aufweitungswinkel δ für den Auslassbereich Werte von 13° +/- 1° zur Längsachse des Rohrendstücks (12) annehmen kann.

7. Dosiervorrichtung nach Anspruch 1, wobei eine Rohrverbindung (170) zu einem stromauf liegenden Schmelzofen (160) vorgesehen ist, und die Rohrverbindung im Betrieb eine kommunizierende Röhre darstellt.

8. Recyclinganlage für Magnesium enthaltende Schrottteile, mit einer Vorwärmstrecke (110), die in ein Weichenstück (120) mündet, das seinerseits eine wechselseitig einstellbare Verbindung zu zwei verschiedenen, separat stehenden Schmelzöfen (140) aufweist,
und wobei ein Mechanismus (182) vorgesehen ist, der vorgewärmte Schrottteile wechselseitig dem einen (140A) und dem anderen Schmelzofen (140B) zuführt.

9. Recyclinganlage für Magnesium enthaltende Schrottteile nach dem vorstehenden Anspruch, enthaltend eine Dosiervorrichtung nach einem der Ansprüche 1 bis 7.

10. Verfahren zum Abfüllen einer flüssigen, insbesondere magnesiumhaltigen Schmelze, **gekennzeichnet durch** die Schritte:
a) Leiten der flüssigen Schmelze aus einem Dosierofen (160) **durch** eine Rohrleitung (170) mit einem Dosierausgang,
b) wobei der Eingang der Rohrleitung (170) unter dem Schmelzenspiegel im Dosierofen (160) und oberhalb des Dosierausgangs befindlich ist,
c) und die Rohrleitung (170) beim Abfüllen im wesentlichen frei ist von Gas, so dass die Schmelze **durch** die statische Druckdifferenz resultierend aus dem Höhenunterschied zwischen Rohreingang und Dosierausgang gefördert wird.

11. Verfahren nach dem vorstehenden Anspruch, wobei für eine Unterbrechung des Förderstromes der Schmelze die Rohrleitung (170) angehoben wird, so dass entweder die Höhendifferenz nicht mehr den Schmelzenstrom treibt, oder der Eingang der Rohrleitung auf einem Niveau oberhalb des Schmelzenspiegels befindlich ist.

12. Verfahren zum Transport einer flüssigen, bevorzugt metallischen Schmelze durch ein Rohr, **gekennzeichnet dadurch, dass**
a) das Rohr mit der Schmelze befüllt wird,
b) die Schmelze durch das Rohr geleitet wird, und
c) wobei das Rohr als eine kommmunizierende Röhre betrieben wird.
